# FASCICULE DE BREVET EUROPEEN

(11) **EP 2 627 960 B1**
(45) Date de publication et mention de la délivrance du brevet: **30.04.2014**
(21) Numéro de dépôt: 12815608.0
(22) Date de dépôt: 19.12.2012
(51) Int. Cl.: F27B 9/10, F27B 9/24, B29C 35/06, B29C 67/24, F26B 13/10

(54) **ETUVE POUR LA FABRICATION D'UN PRODUIT EN LAINE MINERALE**
OFEN ZUR HERSTELLUNG EINES MINERALWOLLERZEUGNISSES
OVEN FOR MANUFACTURING A MINERAL WOOL PRODUCT

(30) Priorité: 20.12.2011 FR 1162034
(43) Date de publication de la demande: 21.08.2013
(73) Titulaire: Saint-Gobain Isover, 92400 Courbevoie (FR)
(72) Inventeur: CELLE, Pierre, 75014 Paris (FR); BAUDOUIN, Bernard, 60290 Rantigny (FR)
(74) Mandataire: Lucas, Francois
(86) Numéro de dépôt international: PCT/FR2012/053004
(87) Numéro de publication internationale: WO 2013/093348

(56) Documents cités:
- EP-A1- 0 000 111

## Description

L'invention se rapporte au domaine des produits tels que des panneaux, rouleaux ou coquilles à base de fibres minérales du type fibres de verre ou fibres de roche, notamment de fibres de verre. Elle s'applique tout particulièrement à la fabrication de produits d'isolation acoustique et/ou thermique en particulier pour bâtiments. Plus précisément la présente invention se rapporte aux étuves utilisées pour l'obtention de tels produits.

Les produits d'isolation commercialisés à l'heure actuelle sont constitués d'un matelas de fibres minérales, telles que des fibres de verre liées, entre elles par un liant organique.

La fabrication de tels matelas de fibres isolantes comprend primairement le fibrage et le dépôt de fibres sur un convoyeur ou transporteur mobile perforé. L'amas de fibres néoformé est plaqué sur le convoyeur à l'aide de caissons d'aspiration agencés sous le transporteur sur lequel elles sont déposées. Lors du fibrage, un liant est pulvérisé à l'état de solution ou suspension dans un liquide volatil tel que l'eau sur les fibres étirées, ce liant ayant des propriétés d'adhésivité et comprenant d'habitude une matière durcissable à chaud, comme une résine thermodurcissable, le plus souvent jusqu'à une époque récente une résine phénol/formaldéhyde.

La couche primaire de fibres relativement lâches sur le convoyeur collecteur est ensuite transférée à un dispositif de chauffage appelé communément dans le domaine en cause étuve de réticulation. Le matelas de fibre traverse l'étuve sur toute sa longueur, grâce à des convoyeurs perforés supplémentaires. Ce sont fréquemment deux convoyeurs sans fin en regard l'un de l'autre et espacés d'une distance ajustée pour déterminer l'épaisseur du matelas qui se forme. Chaque brin des convoyeurs est par ailleurs constitué de palettes constituées de grilles articulées entre elles et perforées pour être perméables à l'air et aux autres gaz issus du chauffage du matelas. Un tel matelas présente ainsi une densité plus ou moins importante en fonction du degré de la compression exercée par les deux transporteurs dans l'étuve.

Pendant son passage dans l'étuve, le matelas est asséché et soumis à un traitement thermique spécifique qui provoque le durcissement du liant présent à la surface des fibres. Ce durcissement entraîne également la réticulation des fibres les unes aux autres selon une structure tridimensionnelle (c'est-à-dire une liaison via le liant thermodurci aux points de contact entre les fibres) et ainsi la stabilisation et l'élasticité du matelas à l'épaisseur désirée, que ce soit sous l'effet d'une flexion ou d'une compression.

Le mode opératoire utilisé pour provoquer le durcissement du liant consiste à faire passer de l'air chauffé dans le matelas, de telle façon que le liant présent dans toute l'épaisseur du matelas soit porté progressivement à une température supérieure à sa température de durcissement. A cette fin, l'étuve de réticulation est composée d'une enceinte constituant une chambre fermée dans laquelle sont disposés une série de caissons alimentés par des brûleurs en air chaud mis en circulation par des ventilateurs. Chaque caisson défini ainsi une zone indépendante de chauffage, dans laquelle sont réglées des conditions spécifiques de chauffage. Les caissons sont séparés par des parois présentant des ouvertures pour le matelas et les convoyeurs supérieurs et inférieurs. L'utilisation d'une pluralité de caissons permet ainsi une élévation graduée de la température du matelas tout au long de sa traversée de l'étuve et évite ainsi l'apparition de point chaud dus à un chauffage localement trop important ou alternativement la présence au sein du matelas de zones dans lesquelles le liant n'aurait pas été entièrement thermodurci. Une étuve utilisée dans le procédé de fabrication de laine minérale comprend ainsi très couramment une multitude de caissons (par exemple entre 3 et 10), ainsi que des moyens connus permettant d'établir des conditions thermiques variables au sein de chaque caisson. Il est alors possible de régler la montée en température du matelas dans la succession d'étages de cuisson, sur le trajet du matelas dans l'étuve. Des exemples de telles étuves sont notamment décrits dans les publications EP 000111A1, EP 619465A1 ou encore W02008/119778, auxquelles on se réfèrera pour plus de précisions. Dans une étuve de réticulation classique, tel qu'illustrée sur la figure 2 de la demande EP 000111 ou les figures 23 et 5 de la demande EP 619465, les moyens d'introduction d'air chaud sont disposés sur un même et seul coté des caissons, l'évacuation des gaz après traversée du matelas se faisant sur le même coté dudit caisson. Un mode de réalisation alternatif consiste à évacuer l'air sur le coté opposé.

A l'heure actuelle, l'utilisation de nouveaux liants alternatif, en remplacement des résines formo-phénoliques, rend le contrôle des conditions du procédé de cuisson du matelas de fibres dans une étuve classique telle que décrite précédemment très difficile. De tels liants, parfois qualifiés de « liants verts », notamment lorsqu'ils sont issus d'une base renouvelable, en particulier végétale, notamment du type à base de sucres hydrogénés ou non, par exemple tel que décrit dans les demandes WO 2009/080938 et WO 2010/029266, nécessitent le plus souvent une très bonne régulation des températures de cuisson pour atteindre l'état thermodurci, la gamme de température de cuisson étant plus étroite. Tout particulièrement le liant doit être soumis à une température comprise entre un minimum pour achever son durcissement et un maximum au delà duquel il se dégrade rapidement, ce qui se traduit au final par des propriétés mécaniques dégradées du produit final, même après son installation. La différence entre le minimum et le maximum, en fonction du type de liant vert, peut être de l'ordre de seulement 20°C, voire moins. Le contrôle de la température dans toute l'épaisseur du matelas de fibres nécessite donc de nouvelles techniques et en particulier des changements dans la conception même des étuves.

L'objet de la présente invention est ainsi de répondre aux problèmes précédents et en particulier de proposer une étuve configurée pour réguler de façon plus précise, en tout point du matelas de fibre et au travers de toute son épaisseur, la température de cuisson « vue » par le liant thermodurcissable. En particulier, une telle régulation peut être obtenue selon l'invention par un meilleur contrôle des vitesses verticales de traversée du matelas de fibres par les flux d'air chauds utilisés pour ajuster ladite température. Ainsi, selon la présente invention, il a été observé qu'une forte homogénéité de ladite vitesse verticale des gaz à la traversée du matelas se traduit par un contrôle amélioré de ses propriétés finales. Tout particulièrement, contrairement à l'idée reçue telle que mise en oeuvre dans les publications antérieures précédemment citées, les études menées par la société déposante ont montré qu'une plus grande homogénéité desdites vitesses était fortement dépendante de la localisation des points d'introduction des gaz chauds au sein de l'étuve et en particulier au sein de chaque caisson successif constitutif de celle-ci.

Plus précisément, la présente invention se rapporte à une étuve de cuisson d'un liant thermodurcissable présent dans un matelas de fibres minérales, comprenant une série de caissons traversés successivement par ledit matelas de fibres, ledit matelas étant comprimé et transporté au travers desdits caissons par des convoyeurs supérieurs et inférieurs perméables aux gaz. Chaque caisson présente selon la direction de déplacement du matelas une longueur L et comporte des moyens d'introduction d'un flux d'air chaud, disposés soit au dessus soit en dessous dudit matelas de fibre et des moyens d'évacuation de l'air après traversée du matelas, disposés respectivement soit en dessous soit au dessus de la face opposée dudit matelas, de telle façon que le liant soit progressivement amené à une température supérieure à sa température de durcissement. Ladite étuve comporte au moins un caisson dans lequel lesdits moyens d'introduction d'air chaud comprennent des arrivées d'air débouchant pour partie sur des ouvertures pratiquées sur un premier coté latéral et pour partie sur des ouvertures pratiquées sur le coté latéral opposé dudit caisson.

Selon des modes particuliers et préférés de l'invention, qui peuvent être le cas échéant combinés entre eux :
- Lesdits moyens d'évacuation de l'air après traversée du matelas comprennent des sorties d'air débouchant pour partie sur des ouvertures pratiquées sur le premier coté latéral et pour partie sur des ouvertures pratiquées sur le coté latéral opposé dudit caisson.
- Selon la direction donnée par la longueur L du ou desdits caissons, les ouvertures pratiquées pour les arrivées d'air selon le premier coté sont disposées sensiblement en regard des ouvertures pratiquées pour les arrivées d'air selon le coté opposé.
- Selon la direction donnée par la longueur L du ou desdits caissons, les ouvertures pratiquées pour les arrivées d'air selon un premier coté et les ouvertures pratiquées pour les arrivées d'air selon le coté opposé sont décalées.
- Selon la direction donnée par la longueur L du ou desdits caissons, les ouvertures selon le premier coté et les ouvertures selon le coté opposé présentent une zone de recouvrement comprise entre 5 et 30% de la longueur L, notamment entre 10 et 20% de la longueur L.
- Alternativement, selon la direction donnée par la longueur L du ou desdits caissons, les ouvertures selon le premier coté et les ouvertures selon le coté opposé ne présentent pas de zone de recouvrement.
- Selon la direction donnée par la longueur L du ou desdits caissons, les ouvertures pratiquées pour les arrivées d'air sur les deux cotés sont décalées et sont disposées :
- selon un premier coté: depuis une première extrémité de la longueur du caisson vers

l'extrémité opposée du caisson, sur une portion inférieure à 80 % de ladite longueur, de préférence sur une portion inférieure à 60% de ladite longueur, et de manière très préférée sur une portion inférieure à 50% de ladite longueur,
- selon le coté opposé : depuis l'extrémité opposée de la longueur du caisson vers l'autre extrémité, sur une portion inférieure à 80 % de ladite longueur, de préférence sur une portion inférieure à 60% de ladite longueur, et de manière très préférée sur une portion inférieure à 50% de ladite longueur.
- Selon la direction donnée par la longueur L du ou desdits caissons, les ouvertures pratiquées selon un premier coté s'étendent depuis une première extrémité jusqu'au centre dudit caisson et dans laquelle les ouvertures pratiquées selon le coté opposé s'étendent depuis l'autre extrémité jusqu'au centre dudit caisson.
- Selon la direction donnée par la longueur L du ou desdits caissons, les ouvertures pratiquées pour les évacuations d'air après traversée du matelas de fibres sont disposées au dessus des ouvertures d'arrivées d'air.
- Selon la direction donnée par la longueur L du ou desdits caissons, les ouvertures pratiquées pour les évacuations d'air après traversée du matelas de fibres sont décalées par rapport aux ouvertures d'arrivée d'air.

La présente invention se rapporte également à un caisson tel que décrit précédemment.

En outre, la présente invention porte également sur un procédé de fabrication d'un matelas de fibres de laine minérale, en particulier de fibres de laine de verre, comprenant au moins une étape de fibrage desdites fibres sur lesquelles est pulvérisée une solution de liant thermodurcissable et une étape de chauffage du liant jusqu'à une température permettant le durcissement du liant, dans lequel ladite étape de chauffage est mise en oeuvre au moyen d'une étuve tel que précédemment décrit.

L'invention trouve notamment son application dans un procédé de fibrage sans lequel ledit liant est issu d'une base végétale, en particulier de base sucres hydrogénés ou non. Selon un mode avantageux d'un tel procédé, on peut injecter dans l'étuve de l'air chaud dont la température est comprise entre 200°C et 250°C.

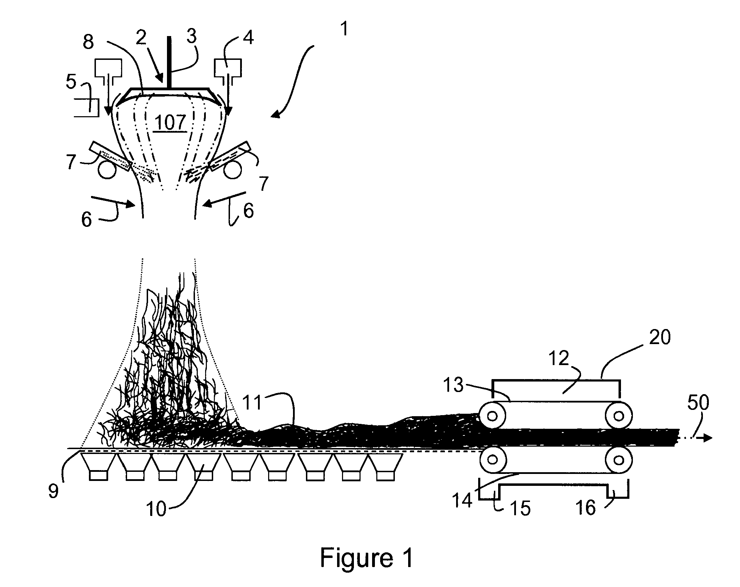

Les caractéristiques de différents modes de réalisation vont maintenant être décrites, en relation avec les figures 1 à 6 annexées. Bien évidemment ces différents modes sont donnés uniquement à titre d'illustration et en particulier ne limite en rien l'étendue de la présente, sous aucun des aspects qui vont maintenant être décrits.
La figure 1 décrit une installation actuelle de fibrage d'un produit en laine de verre, dans laquelle peut s'insérer l'étuve selon l'invention.
La figure 2 illustre schématiquement le principe de fonctionnement d'une étuve comparative.
La figure 3 donne une représentation schématique d'un des caissons constitutifs de l'étuve selon la figure 2.
La figure 4 illustre schématiquement le principe de fonctionnement d'un caisson selon le premier mode de réalisation de la présente invention.
La figure 5 illustre schématiquement le principe de fonctionnement d'un caisson selon un second mode de réalisation de la présente invention.
La figure 6 illustre schématiquement le principe de fonctionnement d'un caisson selon un troisième mode de réalisation de la présente invention.

Telle que représentée sur la figure 1, une ligne de production de panneaux isolants à base de laine de verre comporte une unité de fibrage 1 en soi parfaitement connue, par exemple conforme au procédé de fibrage par centrifugation interne dont des exemples de réalisation sont décrits dans les demandes EP 0 406 107 ou EP 0 461 995. L'unité de fibrage comporte une hotte (non représentée sur la figure 1) surmontée d'au moins un centrifugeur 2. Chaque centrifugeur comprend un panier (non représenté sur la figure 1) pour la récupération d'un filet de verre de fibrage préalablement fondu et une pièce 8 en forme d'assiette dont la paroi périphérique est munie d'un grand nombre d'orifices. En fonctionnement, le verre fondu, amené en un filet 3 depuis un four de fusion (non représenté) et d'abord récupéré dans le panier du centrifugeur, s'échappe par les orifices de l'assiette 8 sous la forme d'une multitude de filaments entraînés en rotation. Le centrifugeur 2 est par ailleurs entouré par un brûleur annulaire 4 qui crée à la périphérie de la paroi du centrifugeur un courant gazeux à grande vitesse et à température suffisamment élevée pour étirer les filaments de verre en fibres sous la forme d'un voile 107. Le fibrage selon ce procédé est intégral et produit 100% de fibres utiles. Le procédé garantit en outre des fibres longues et souples.
Des moyens de chauffage 5 par exemple du type inducteurs servent à maintenir le verre et le centrifugeur à la bonne température. Le voile 107 est refermé par un courant gazeux d'air introduit sous pression, schématisé par les flèches 6. Le tore 107 est entouré par un dispositif de pulvérisation de l'encollage contenant un liant thermodurcissable en solution aqueuse, dont seuls deux éléments 7 sont représentés sur la figure 1.

Le fond de la hotte de fibrage est constitué par un dispositif de réception des fibres comprenant un convoyeur incorporant une bande sans fin 9 perméable aux gaz et à l'eau, sous laquelle sont disposés des caissons d'aspiration 10 des gaz tels que l'air, les fumées et les compositions aqueuses excédentaires issues du processus de fibrage précédemment décrit. Il se forme ainsi sur la bande 9 du convoyeur un matelas 11 de fibres de laine de verre mélangées intimement avec la composition d'encollage. Le matelas 11 est conduit par le convoyeur jusqu'à une étuve 12 de réticulation du liant thermodurcissable.

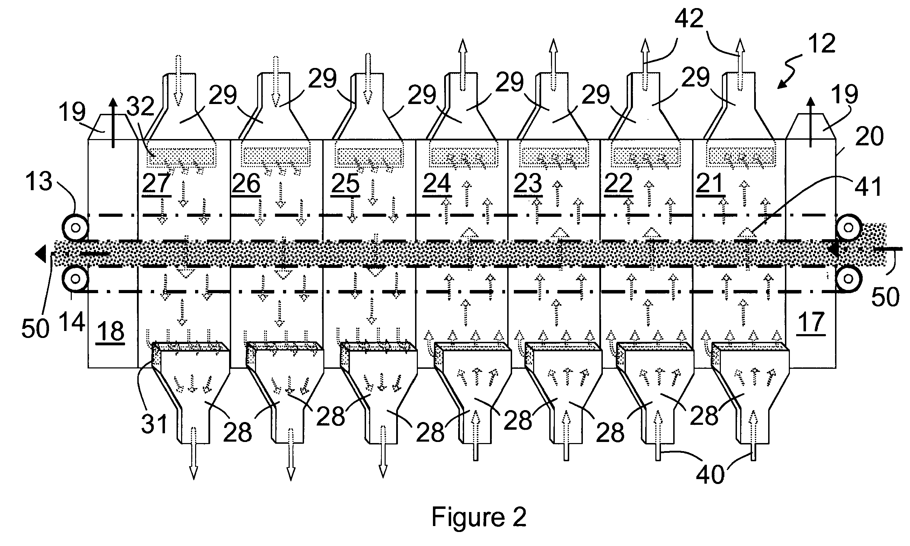

Comme représenté sur les figures 1 et 2, cette étuve 12 est entourée par une enceinte 20 fermée délimitant des sas d'entrée 17 et de sortie 18 et une série de caissons 21-27 séparés par les uns des autres par des parois et individuellement alimentés en air chaud par des brûleurs mis en circulation par des ventilateurs (non représentés sur les figures 1 et 2). L'enceinte est traversée par deux convoyeurs 13, 14 de transport et de calibrage du matelas 11. Ces convoyeurs 13, 14 sont par exemple mis en rotation par des moteurs placés au sol (15, 16 sur la figure 1), et sont constitués de façon bien connue par une succession de palettes constituées de grilles articulées entre elles et perforées pour être perméables aux gaz.

Tout en assurant le passage des gaz chauds favorisant la prise rapide du liant, les convoyeurs 13, 14 compriment le matelas 11 pour lui donner l'épaisseur souhaitée. A titre d'exemple, pour un panneau roulé, celle-ci est typiquement comprise entre 10 et 450 mm, la densité de la couche de laine de verre étant par exemple comprise entre 5 et 150 kg/m³. On distingue ainsi par exemple les produits dits de faible densité, pour lesquels la masse volumique varie entre 5 et 20 kg/m³ et les produits dits de forte densité, dans lesquels la densité varie entre 20 et 150 kg/m³.

La figure 2 décrit plus en détail la structure de l'étuve de réticulation 12. L'étuve représentée sur la figure 2, sans que cela puisse être considéré comme limitatif de la portée de la présente invention, comprend sept caissons 21-27 dont le détail est illustré plus en détail dans les figures suivantes, en plus des sas d'entrée et de sortie 18.

Les sas d'entrée et de sortie débouchent sur des hottes 19 de sortie des fumées (dont le sens d'évacuation est représenté sur la figure 2 par des flèches pleines noires), ces hottes étant reliées à un circuit dédié de traitement desdites fumées (non représenté sur les figures).

Dans le premier sas d'entrée 17, l'air chaud introduit dans le matelas permet la vaporisation de l'eau présente. Après traversée du matelas, l'air chargé d'humidité est évacué par la hotte 19 de sortie des fumées.

Sur les figures, la circulation de l'air dans l'étuve est représentée par des flèches en pointillés 40. Le sens de circulation du matelas est indiqué par les flèches 50.

Dans les premiers caissons, par exemple les caissons 21-24, l'air chaud est introduit par le bas de l'étuve et évacué par le haut, après traversée du matelas. L'utilisation d'une pluralité de caissons permet la montée en température progressive du matelas de fibres jusqu'à une température supérieure à la température de durcissement du liant présent sur les fibres du matelas.

Dans les caissons suivants, par exemple les caissons 25-27, l'air chaud est cette fois introduit par le haut de l'étuve et évacué par le bas.

Les fumées supplémentaires générées dans les caissons sont finalement évacuées dans le sas de sortie 19, via la hotte 19.

Du contrôle de la température dans les différents caissons dépendent les propriétés mécaniques du produit final, notamment si un liant vert est utilisé, comme indiqué précédemment.

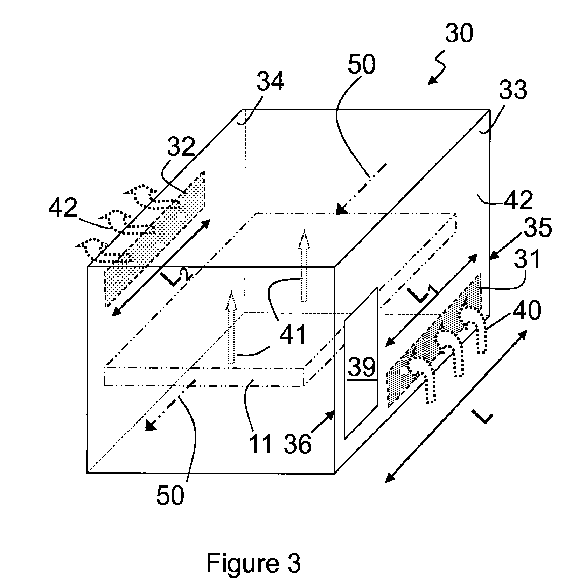

Sur la figure 3 on a représenté plus en détail et de façon schématique un caisson 30.

Sur le caisson 30 représenté sur la figure 3, pour plus de clarté, les conduites d'arrivée 28 et de sortie 29 d'air n'ont pas été représentées. Seules les ouvertures 31 et 32 pratiquées sur le coté du caisson sur lesquelles débouchent respectivement les conduites d'arrivée de l'air chaud et les conduites de sortie de l'air après la traversée du matelas de fibres sont représentées.

Par « ouverture», on entend au sens de la présente description une ouverture unique sur toute la longueur considérée ou une série d'ouvertures ou de fentes rapprochées et espacées les unes des autres par des segments de renforcements (non représentés sur les figures).

Sur la figure 3 on a représenté une configuration classique d'un caisson 30 et de son système d'alimentation en air chaud et d'évacuation en sortie de l'air, après traversée du matelas 11. L'air chaud est introduit au niveau des ouvertures 31 selon les flèches 40, disposées sur un premier coté 33 du caisson, par référence au sens de circulation 50 du matelas définissant la longueur L de traversée du matelas le long du caisson. L'air chaud, tel que schématisé par les flèches 41, traverse ensuite les convoyeurs perforés (non représentés sur la figure 3) et le matelas de fibres 11 pour augmenter progressivement la température à l'intérieur de celui-ci. Après traversée, l'air est ensuite recyclé et évacué par des ouvertures 32 (tel que symbolisé par des flèches 42), pratiquées sur le coté opposé 34 du caisson. Les ouvertures 31 et 32 couvrent des longueurs L₁ et L₂ classiquement comprises par exemple entre 20 et 70% de la longueur L du caisson. Selon le mode de réalisation illustré par la figure 3, donné à titre comparatif, l'ouverture d'entrée des gaz 31 s'étend sensiblement depuis une première extrémité 35 du caisson vers l'autre extrémité 36 du caisson, sur une portion de longueur L₁ de l'ordre des 2/3 de la longueur totale L du caisson, selon le sens de déplacement du matelas de fibres. L'ouverture de sortie des gaz 32 s'étend sensiblement depuis l'autre extrémité 36 du caisson vers ladite première extrémité 35 du caisson, sur une portion de longueur L₂ également de l'ordre des 2/3 de la longueur totale L du caisson. Une porte d'accès 39 au caisson 30 est également prévue sur la portion de longueur ne présentant pas d'ouverture, utile pour la maintenance et le nettoyage de celui-ci et des convoyeurs.

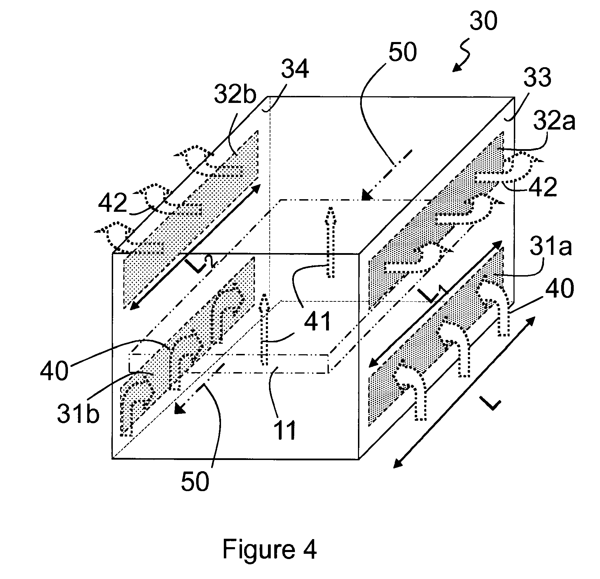

Sur la figure 4, on a représenté cette fois un caisson 30 conforme à l'objet de la présente invention, selon une première réalisation. Sur toutes les figures, les mêmes numéros désignent les mêmes éléments ou sensiblement les mêmes éléments, sans qu'il soit besoin de répéter encore leurs significations. Conformément à la présente invention, dans le caisson 30, les arrivées d'air débouchent pour partie sur des ouvertures 31 pratiquées sur un premier coté latéral 33 et pour partie sur le coté latéral opposé 34 dudit caisson 30. Sur les figures, on note 31a les ouvertures sur le premier coté et 31b les ouvertures sur le coté opposé. Les ouvertures d'entrée des gaz 31 (31a et 31b) s'étendent sensiblement selon une longueur L₁ depuis une première extrémité 35 du caisson vers l'autre extrémité 36 du caisson, sur la majeure partie, par exemple plus de 70% ou même plus de 80%, de la longueur totale L du caisson. L'air chaud 40 est ainsi cette fois introduit par les deux cotés 33 et 34 du caisson, sous le matelas de fibres 11, traverse celui-ci (flèches 41) puis est évacué (flèches 42) dans la partie supérieure du caisson, par les ouvertures 32 (32a et 32b) qui sont disposées au dessus des ouvertures 31 et couvrent sensiblement la même surface (L₁ ≈ L₂). Selon ce premier mode, les ouvertures 31 et 32 sont centrées sur le centre de l'étuve.

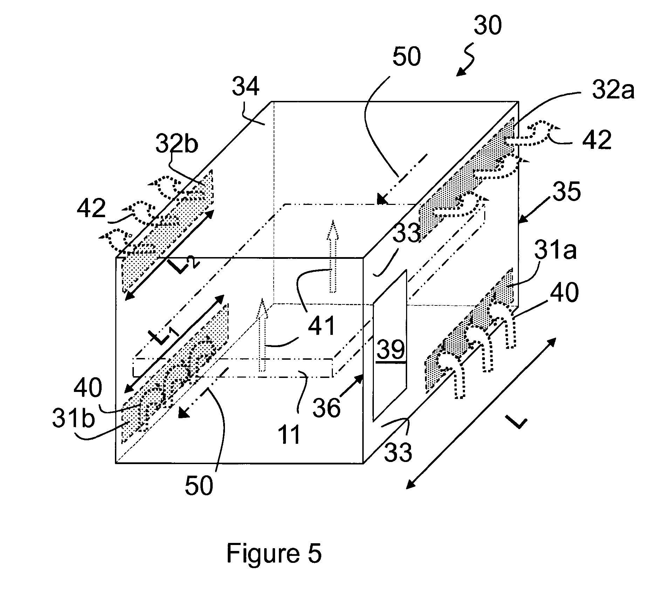

Sur la figure 5, on a représenté un caisson 30 selon une deuxième réalisation conforme à la présente invention. Cette configuration diffère de celle décrite précédemment en connexion avec la figure 4 par la disposition différente des ouvertures 31 et 32. Les ouvertures 31a et 31b d'entrée d'air respectivement présentes sur les cotés latéraux 33 et 34 des caissons sont cette fois décalées les unes par rapport aux autres : sur le premier coté 33, les ouvertures 31a s'étendent depuis une première extrémité 35 vers l'extrémité opposée 36 tandis que sur le deuxième coté 34, les ouvertures 31b s'étendent cette fois depuis l'extrémité 36 vers l'extrémité 35. Comme expliqué en relation avec la figure 1, les ouvertures 31 et 32 ne couvrent selon ce mode qu'une partie L₁ de la longueur totale L du caisson, de l'ordre de 50 à 80%, par exemple environ 2/3 de la longueur L. Il existe donc selon cette configuration dans la partie centrale de l'étuve et selon la direction donnée par la longueur L, une zone de recouvrement entre les ouvertures opposées 31a et 31b, au niveau de laquelle les flux d'air se rencontrent. Cette zone représente par exemple entre 5 et 30% de la longueur L.
Sur chaque coté, les ouvertures 32 sont pratiquées directement au dessus des ouvertures 31, c'est-à-dire que l'ouverture (ou la série d'ouvertures) 31a est disposée au dessus de l'ouverture (ou la série d'ouvertures) 32a sur le coté latéral 33 et l'ouverture 31b est disposée au dessus de l'ouverture 32b sur le coté latéral 34). Sur un même coté, les ouvertures 31 et 32 ne présentent donc pas de décalage selon la longueur L et couvrent sensiblement la même surface (L₁ ≈ L₂). En fonctionnement, l'air chaud 40 est introduit sous le matelas de fibres 11 par les deux cotés du caisson via les ouvertures 31a et 31b, traverse celui-ci (cf. flèches 41) puis est évacué (cf. flèches 42) dans la partie supérieure du caisson, par les ouvertures 32a et 32b.

Tout comme la configuration décrite précédemment en relation avec la figure 1, une telle réalisation présente l'avantage de permettre la présence d'une porte d'accès 39 au caisson 30, utile pour la maintenance et le nettoyage de celui-ci.

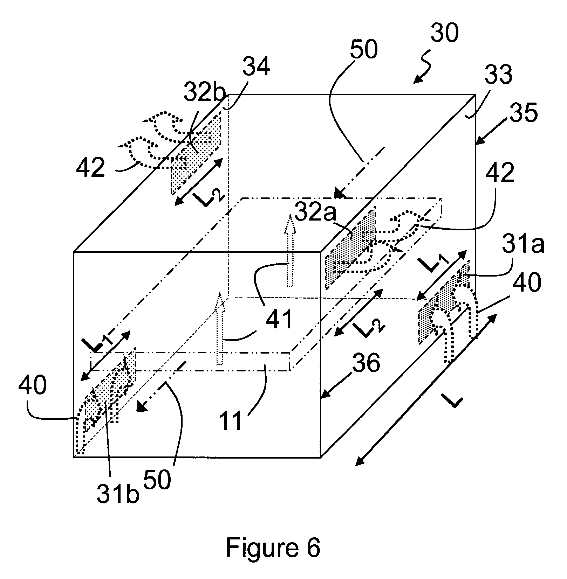

Sur la figure 6, on a représenté un caisson 30 selon une troisième réalisation préférée conforme à la présente invention. Cette configuration diffère de celle décrite précédemment en connexion avec les figures 4 et 5 par une disposition alternative des ouvertures 31 et 32. Les ouvertures 31a et 31b d'arrivée d'air disposées sur chaque coté, respectivement 33 et 34, sont cette fois décalées l'une par rapport à l'autre, selon la direction donnée par la longueur L. Une première ouverture 31a est disposée selon le premier coté 33 depuis la première extrémité 35 de la longueur du caisson vers le centre du caisson, sur une portion L₁ inférieure à 70% et de préférence inférieure 60 %, voire inférieure à 50% de la longueur L. Sur le coté opposé 34 une seconde ouverture 31b est disposée depuis l'extrémité opposée 36 de la longueur du caisson vers l'autre extrémité 35, sur une portion L₁ également inférieure à 70% et de préférence inférieure 60 %, voire inférieure à 50% de la longueur L. Tel que représenté sur la figure 6, les entrées d'air 31a et 31b sur chacune des faces respectives 33 et 34 ne se font pas face mais sont décalées l'une par rapport à l'autre, chacune s'étendant respectivement à partir d'une première extrémité 35 ou à partir de l'extrémité opposée 36 vers le centre du caisson 30. Selon la configuration préférée représentée sur la figure 2, dans laquelle L₁ et L₂ sont inférieurs à 50% de la longueur L, il n'y a pas de recouvrement dans la zone centrale du caisson entre les ouvertures 31a et 31b. Sans sortir du cadre de l'invention les ouvertures 31a et 31b peuvent également s'étendre au-delà du centre du caisson, une zone de recouvrement étant alors obtenu entre le flux d'air issu de l'ouverture 31a et le flux d'air issu de l'ouverture 31b. Cette zone représente par exemple entre 5 et 30% de la longueur L. Une telle configuration peut avantageusement être utilisée dans le but d'homogénéiser les flux issus des deux arrivées d'air.

Selon ce mode, selon un même principe, les ouvertures pour les sorties d'air 32a et 32b sur chacune des faces respectives 33 et 34 ne se font pas face mais sont décalées l'une par rapport à l'autre de la même façon que précédemment expliqué. Ainsi, les sorties d'air 32 (32a et 32b) ne sont pas, selon un même coté, directement disposées au dessus des ouvertures d'entrées d'air 31 (respectivement 31a et 31b) mais sont également décalées par rapport à celles-ci. De la sorte, on obtient ainsi au final un caisson dans lequel à la fois respectivement les ouvertures 31a et 31b pour les entrées d'air et les ouvertures 32a et 32b pour les sorties d'air ne se font pas face mais sont décalées d'un coté à un autre, selon la direction de déplacement du matelas.

Des exemples sont fournis à titre illustratif et afin d'apprécier les performances des différents modes de réalisation précédemment exposés et les comparer par rapport aux systèmes d'étuve actuels.

Plus précisément, dans les exemples qui suivent, une modélisation de ces différents modes, sur un unique caisson présentant l'une des configurations précédentes a été effectuée. Les conditions de la simulation et les résultats obtenus sont donnés ci-après :

Pour réaliser cette étude comparative, un modèle aéraulique d'étude des écoulements d'air chaud à l'intérieur d'un caisson tel que précédemment décrit a été utilisé sur la base des hypothèses et approximations suivantes :
- Les échanges thermiques à l'intérieur du matelas sont pris en compte via un terme source qui modélise globalement la perte thermique. La différence de température entre la partie supérieure et inférieure du matelas est ajustée par l'intermédiaire de ce terme source.
- On considère une absence d'inertie des composants (pas de chauffage des tapis, des convoyeurs, des tôles, ...)
- Les gaz chauds de l'étuve sont assimilés à de l'air chaud, l'air étant considéré comme un gaz parfait.
- La perméabilité du produit est supposée isotrope et les zones de fuites entre les palettes sont modélisées à l'aide d'un milieu poreux dont on fait varier la perméabilité pour obtenir le niveau de fuites.
- Les pertes thermiques au niveau des parois ne sont pas prises en compte.

Bien que ce modèle puisse être considéré comme approximatif vis-à-vis des échanges de chaleur entre le matelas et les gaz chauds qui circulent dans le caisson modélisé, il possède la précision suffisante pour analyser en valeur relative la répartition de la pression sur les faces supérieures et inférieures du matelas. Il permet en particulier d'analyser les différences relatives de la distribution de vitesse à travers le matelas pour les différentes configurations précédemment décrites en relation avec les figures 3 à 6 jointes.

En outre, les simulations sont réalisées à débit imposé et constant et à perméabilité de matelas constante, ce qui permet de visualiser directement la perte de charge générée dans l'étuve et de la comparer entre les différentes configurations. La perte de charge est directement reliée à la consommation énergétique de l'installation.

Les paramètres suivants sont utilisés pour les simulations: Les simulations font usage du logiciel Fluent, utilisé de manière stationnaire. Le solveur utilisé est basé sur la pression, selon un algorithme découplé de type « SIMPLE ».
On considère un écoulement mono-espèce d'air assimilé à un gaz parfait à thermodynamique variable avec λ (conductivité
thermique), *cₚ* (chaleur massique) et µ (viscosité) fonctions de la température.
La turbulence est modélisée par le modèle k-w SST fourni par le logiciel Fluent ®.
Les conditions aux limites suivantes ont été imposées : Pour les entrées d'air chaud au niveau de la sortie de ventilateur :
- Débit total imposé d'air: 5 kg/s
- Température totale : 235°C.

Les gaz du bruleur sont assimilés à de l'air chaud.

En ce qui concerne le matelas de laine de verre :
- Perméabilité K du matelas à l'air, l'indice «perpendiculaire» indiquant qu'elle est mesurée à travers l'épaisseur du produit et l'indice «parallèle» indiquant qu'elle est mesurée dans le plan du matelas de laine de verre :
   a) pour un produit de plus forte densité (densité supérieure à 20 kg/m³) : : K_{⊥}=K_{//}=2.10^{-g} m²,
   b) pour un produit de plus faible densité (densité inférieure à 20 kg/m³) : K_{⊥}= K_{//} =1.10⁻⁸ m².
- Epaisseur : 100 mm,
- Pertes thermique : ΔT=30°C,
- Vitesse de défilement : 0,18 m/s.

En ce qui concerne les grilles perforées :
- Forte perméabilité transverse : la perte de charge générée par l'écoulement au travers des grilles est considérée comme négligeable devant la perte de charge générée dans le matelas.
- Faible perméabilité longitudinale : la perméabilité longitudinale est 10 fois plus faible que dans le matelas. Les pertes thermiques des parois de l'étuve sont négligées.
La largeur des ouvertures est égale à 12% de la hauteur totale du caisson.

L'évaluation des performances entre les différentes configurations est permise par la comparaison des différentes valeurs finalement obtenues pour :
- La perte de charge générée dans les gaines de ventilation, au passage au travers du caisson et du matelas de fibres,
- L'homogénéité de la distribution de la vitesse verticale moyenne de traversée du matelas de fibres. Cette homogénéité est mesurée par le calcul de la variance de ladite vitesse verticale, selon la largeur du matelas de fibres et intégrée sur toute la longueur de celui-ci.

Le tableau 1 qui suit résume l'ensemble des résultats trouvés pour les différentes configurations simulées en connexion avec les figures 3 à 6.

**Tableau 1**

| **Exemple** | **Exemple 1** | **Exemple 2** | **Exemple 3** | **Exemple 4** |
|---|---|---|---|---|
| **Illustration** | Figure 3 (comp.) | Figure 4 | Figure 5 | Figure 6 |
| **Longueur ouverture(s)** | L₁=L₂= 0, 67L | L₁=L₂= 0,86L | L₁=L₂= 0, 67L | L₁=L₂= 0, 47L |
| **Configuration ouvertures** | -1 entrée (31) | -2 entrées (31a-31b) | - 2 entrées (31a et 31b) | - 2 entrées (31a et 31b) |
| | -1 sortie (32) | -2 sorties (32a-32b) | - 2 sorties (32a et 32b) | - 2 sorties (32a et 32b) |
| **Décalage des ouvertures suivant la longueur L** | entre entrée 31 et sortie 32 | - Aucun décalage | - Entrées 31a et 31b décalées | - Entrées 31a et 31b décalées |
| | | | - Pas de décalage entre entrées 31a (31b) et sorties 32a (32b) | - Décalage entre entrées 31a (31b) et sorties 32a (32b) |

| Matelas de plus faible densité (7 kg/m³) | | | | |
|---|---|---|---|---|
| **Perte de charge ΔP (Pascals)** | 212 | 179 | 135 | 110 |
| **Vitesse verticale moyenne (m/s)** | 0,229 | 0,227 | 0,218 | 0,227 |
| **Ecart type vitesse (10⁻³m/s)** | 3,0 | - 1,7 | 1,0 | 0,6 |

| Matelas de plus forte densité (28 kg/m³) | | | | |
|---|---|---|---|---|
| **Perte de charge ΔP (Pascals)** | 258 | 225 | 186 | 154 |
| **Vitesse verticale moyenne (m/s)** | 0,096 | 0,095 | 0,096 | 0,096 |
| **Ecart type vitesse (10⁻³m/s)** | 0,4 | - 0,3 | 0,2 | 0,1 |

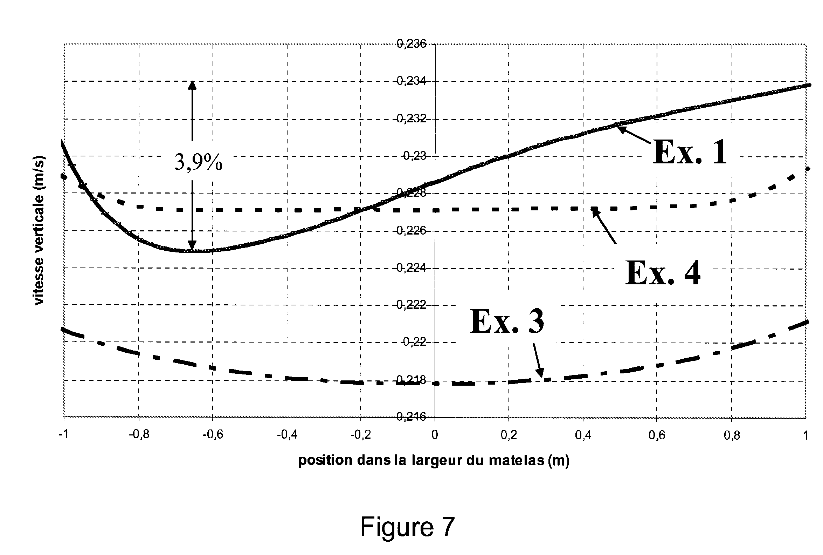

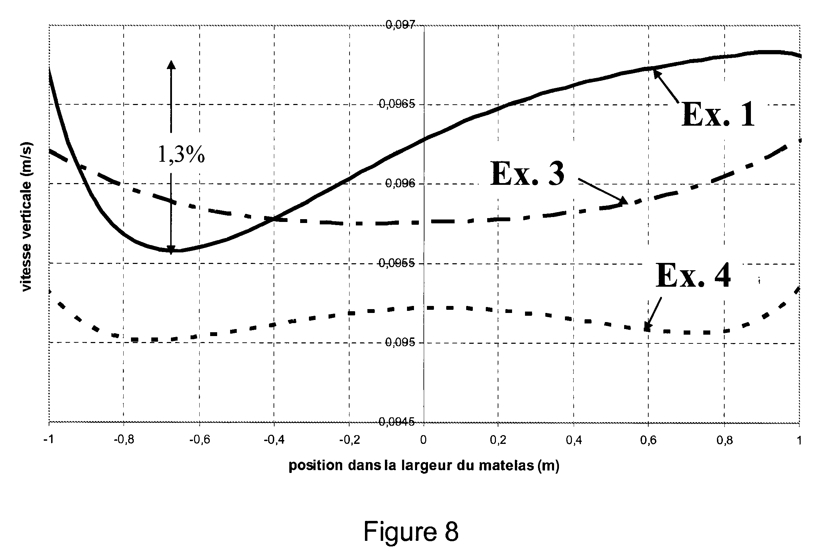

Sur les figures 7 et 8 attachées, on a reporté les profils de vitesse verticale sur la largeur du matelas de fibres obtenus pour les exemples 1 (comparatif), 3 et 4, intégrés sur toute la longueur du caisson, dans le cas du matelas de fibres de plus faible densité (figure 7) et dans le cas du matelas de fibres de plus forte densité (figure 8).

Les commentaires suivants sont fournis :
1°) En ce qui concerne les résultats obtenus avec les matelas de plus faible densité :
   Les résultats reportés dans le tableau 1 indiquent une diminution sensible de la perte de charge ΔP générée dans les gaines de ventilation pour l'ensemble des différentes configurations selon l'invention, par rapport à la configuration de référence (exemple 1 illustré par la figure 3), dans laquelle l'alimentation en air chaud est effectuée sur un seul côté du caisson.
   Tout particulièrement, la configuration selon l'exemple 4 (illustré par la figure 6) s'avère particulièrement avantageuse, puisqu'une diminution d'un facteur presque égal à 2 de la perte de charge est constatée, pour des produits de faible densité.
   Pour la configuration selon l'exemple 2, la diminution de la perte de charge est tout à fait significative bien que moins prononcée que celle obtenue pour la configuration selon l'exemple 4.
   Une amélioration de la perte de charge est également mesurée pour la configuration selon l'exemple 3, bien que plus limitée.
   En outre, une amélioration de l'ordre de 80% de l'écart type de la vitesse verticale est constatée pour l'exemple 4 lorsque l'on intègre les profils de vitesse suivant le sens de défilement du produit, c'est-à-dire sur la longueur de l'étuve.
   Comme représenté sur la figure 7, selon la configuration de l'exemple 1 comparatif, on peut calculer un écart de 3,9% entre le minimum et le maximum de vitesse avec une très forte disparité gauche / droite (en s'affranchissant des effets de bords). Il est à noter qu'un tel écart est de l'ordre de celui qui est constaté réellement sur dans un tel caisson, équipant une étuve sur les lignes de production).
   Selon la configuration selon l'invention on voit que cet écart peut être ramené à une valeur inférieure à 1% avec une très faible disparité entre le coté droit et le coté gauche du matelas.
2°) En ce qui concerne les résultats obtenus avec les matelas de plus faible densité :
   Les tendances observées sont les mêmes que celles décrites précédemment pour le produit de faible densité. Une amélioration légèrement moins significative de la perte de charge est constatée. L'homogénéité des vitesses verticales de traversée est également améliorée (cf. figure 8), bien que les disparités gauche / droite obtenues pour la configuration de référence soient moins critiques pour le produit le plus dense.
   En conclusion, les tests de simulation indiquent sans conteste que les configurations selon la présente invention, en particulier les configurations selon les exemples 2 et 4 et tout particulièrement la configuration de l'exemple 4, sont plus performantes que la configuration comparative, considérée comme représentative du domaine antérieur.

Pour les produits de faible densité, une alimentation des deux cotés selon l'invention permet d'homogénéiser la distribution de vitesse gauche / droite ce qui permet meilleure régulation de la température « vue » par le liant en tout point du matelas de fibre et par suite rend possible l'amélioration de la qualité de cuisson du produit et ainsi ses propriétés finales.

Par ailleurs, la mise en oeuvre de l'invention engendre également une diminution conséquente de la perte de charge qui va se traduire concrètement par une augmentation de la capacité de l'étuve et/ou des gains d'efficacité énergétique.

Pour les produits de forte densité, l'amélioration de l'homogénéité de la vitesse est également observée bien que moins significative, la résistance au passage de l'air du matelas permettant d'homogénéiser de fait le champ de vitesse, si celui-ci est initialement très hétérogène. On observe également un gain important, de l'ordre de 40%, de la perte de charge.

Dans les modes de réalisation et les exemples qui précédent, on a représenté les ouvertures pour les arrivées d'air chaud en dessous du matelas de fibres, de sorte que le courant d'air traversant celui-ci soit ascendant, les ouvertures pour les sorties d'air étant disposées dans la partie supérieure du caisson. On ne sortirait bien évidemment pas de l'invention si les ouvertures pour les arrivées d'air chaud étaient disposées au dessus du matelas de fibres, de sorte que le courant d'air traversant celui-ci soit descendant, les ouvertures pour les sorties d'air étant disposées alors dans la partie inférieure du caisson.

Sans sortir du cadre de l'invention, l'étuve selon l'invention peut ne comprendre que les caissons améliorés précédemment décrits. Alternativement, l'étuve selon l'invention peut comprendre des caissons améliorés et des caissons équipés d'ouvertures sur un seul coté, conformes à l'art antérieur. En particulier, les caissons améliorés selon l'invention peuvent être positionnés dans l'étuve uniquement aux emplacements où le durcissement du liant est mis en oeuvre, le contrôle amélioré de la température et de l'homogénéité des vitesses de traversée du matelas étant alors primordiaux.

## Revendications

1. Etuve (12) de cuisson d'un liant thermodurcissable présent dans un matelas (11) de fibres minérales, comprenant une série de caissons (21-27) traversés successivement par ledit matelas de fibres, ledit matelas étant comprimé et transporté au travers desdits caissons par des convoyeurs supérieurs (13) et inférieurs (14) perméables aux gaz, chaque caisson présentant selon la direction de déplacement (50) du matelas une longueur L et comportant en outre des moyens d'introduction (28) d'un flux d'air chaud, disposés soit en dessous, soit au dessus dudit matelas de fibre et des moyens d'évacuation (29) de l'air après traversée du matelas, disposés respectivement soit au dessus, soit en dessous de la face opposée dudit matelas, de telle façon que le liant soit progressivement amené à une température supérieure à sa température de durcissement, ladite étuve étant **caractérisée en ce qu'**elle comporte au moins un caisson (30) dans lequel lesdits moyens d'introduction (28) d'air chaud comprennent des arrivées d'air débouchant pour partie sur des ouvertures (31a, 31b) pratiquées sur un premier coté latéral (33) dudit caisson et pour partie sur des ouvertures pratiquées sur le coté latéral opposé (34) dudit caisson.

2. Etuve selon la revendication 1 dans laquelle, au sein du ou desdits caissons, lesdits moyens d'évacuation de l'air après traversée du matelas comprennent des sorties d'air débouchant pour partie sur des ouvertures (32a, 32b) pratiquées sur le premier coté latéral (33) et pour partie sur des ouvertures pratiquées sur le coté latéral opposé (34) dudit caisson.

3. Etuve selon l'une des revendications 1 ou 2 dans laquelle, selon la direction donnée par la longueur L du ou desdits caissons, les ouvertures (31a) pratiquées pour les arrivées d'air selon le premier coté (33) sont disposées sensiblement en regard des ouvertures (31b) pratiquées pour les arrivées d'air selon le coté opposé.

4. Etuve selon l'une des revendications 1 ou 2 dans laquelle, selon la direction donnée par la longueur L du ou desdits caissons, les ouvertures (31a) pratiquées pour les arrivées d'air selon un premier coté (33) et les ouvertures (31b) pratiquées pour les arrivées d'air selon le coté opposé (33) sont décalées.

5. Etuve selon la revendication 4 dans laquelle, selon la direction donnée par la longueur L du ou desdits caissons, les ouvertures (31a) selon le premier coté (33) et les ouvertures (31b) selon le coté opposé (34) présentent une zone de recouvrement comprise entre 5 et 30% de la longueur L.

6. Etuve selon la revendication 4 dans laquelle, selon la direction donnée par la longueur L du ou desdits caissons, les ouvertures (31a) selon le premier coté (33) et les ouvertures (31b) selon le coté opposé ne présentent pas de zone de recouvrement.

7. Etuve selon l'une des revendications précédentes dans laquelle, selon la direction donnée par la longueur L du ou desdits caissons, les ouvertures (31a, 31b) pratiquées pour les arrivées d'air sur les deux cotés (33, 34) sont décalées et sont disposées :
- selon un premier coté (33) : depuis une première extrémité (35) de la longueur du caisson vers l'extrémité opposée (36) du caisson, sur une portion inférieure à 80 % de ladite longueur,
- selon le coté opposé (34): depuis l'extrémité opposée (36) de la longueur du caisson vers l'autre extrémité (35), sur une portion inférieure à 80 % de ladite longueur.

8. Etuve selon la revendication précédente dans laquelle, selon la direction donnée par la longueur L du ou desdits caissons, les ouvertures (31a) pratiquées selon un premier coté (33) s'étendent depuis une première extrémité (35) jusqu'au centre dudit caisson et dans laquelle les ouvertures (31b) pratiquées selon le coté opposé (34) s'étendent depuis l'autre extrémité (36) jusqu'au centre dudit caisson.

9. Etuve selon l'une des revendications précédentes dans laquelle, selon la direction donnée par la longueur L du ou desdits caissons, les ouvertures (32a) pratiquées pour les évacuations d'air après traversée du matelas de fibres sont disposées au dessus des ouvertures (31a) d'arrivées d'air.

10. Etuve selon l'une des revendications précédentes dans laquelle, selon la direction donnée par la longueur L du ou desdits caissons, les ouvertures (32a) pratiquées pour les évacuations d'air après traversée du matelas de fibres sont décalées par rapport aux ouvertures (31a) d'arrivée d'air.

11. Caisson tel que décrit dans l'une des revendications précédentes.

12. Procédé de fabrication d'un matelas de fibres de laine minérale, en particulier de fibres de laine de verre, comprenant au moins une étape de fibrage desdites fibres sur lesquelles est pulvérisée une solution de liant thermodurcissable et une étape de chauffage du liant jusqu'à une température permettant le durcissement du liant, dans lequel ladite étape de chauffage est mise en oeuvre au moyen d'une étuve selon l'une des revendications 1 à 10.

13. Procédé selon la revendication précédente dans lequel ledit liant est issu d'une base végétale, en particulier de base sucres hydrogénés ou non.

14. Procédé selon l'une des revendications 12 ou 13, dans lequel on injecte dans l'étuve de l'air chaud dont la température est comprise entre 200°C et 250°C.

## Patentansprüche

1. Ofen (12) zum Härten eines in einer Mineralfasermatte (11) vorliegenden wärmehärtbaren Bindemittels, umfassend eine Reihe von Kästen (21-27), die nacheinander von der Fasermatte durchlaufen werden, wobei die Matte von gasdurchlässigen oberen (13) und unteren (14) Förderern gepresst und durch die Kästen transportiert wird und jeder Kasten in der Vorschubrichtung (50) der Matte eine Länge L aufweist und ferner Mittel (28) zum Einführen eines Heißluftstroms umfasst, die entweder unter oder über der Fasermatte angeordnet sind, sowie Mittel (29) zum Abführen der Luft nach Durchqueren der Matte, die jeweils entweder über oder unter der entgegengesetzten Seite der Matte angeordnet sind, so dass das Bindemittel schrittweise auf eine Temperatur gebracht wird, die höher ist als seine Aushärttemperatur, wobei der Ofen **dadurch gekennzeichnet ist, dass** er mindestens einen Kasten (30) umfasst, in dem die Mittel (28) zum Einführen von Heißluft Lufteinlässe aufweisen, die zum Teil in Öffnungen (31a, 31b) auf einer ersten Seite (33) des Kastens und zum Teil in Öffnungen auf der gegenüberliegenden Seite (34) des Kastens einmünden.

2. Ofen nach Anspruch 1, bei dem in dem Kasten oder den Kästen die Mittel zum Abführen der Luft nach Durchströmen der Matte Luftauslässe aufweisen, die zum Teil in Öffnungen (32a, 32b) auf der ersten Seite (33) und zum Teil in Öffnungen auf der gegenüberliegenden Seite (34) des Kastens einmünden.

3. Ofen nach einem der Ansprüche 1 oder 2, bei dem in der durch die Länge L des Kastens oder der Kästen vorgegebenen Richtung die für die Lufteinlässe entlang der ersten Seite (33) vorgesehenen Öffnungen (31a) im Wesentlichen gegenüberliegend zu den für die Lufteinlässe entlang der gegenüberliegenden Seite vorgesehenen Öffnungen (31 b) angeordnet sind.

4. Ofen nach einem der Ansprüche 1 oder 2, bei dem in der durch die Länge L des Kastens oder der Kästen vorgegebenen Richtung die für die Lufteinlässe entlang einer ersten Seite (33) vorgesehenen Öffnungen (31a) und die für die Lufteinlässe entlang der gegenüberliegenden Seite (34) vorgesehenen Öffnungen (31b) zueinander versetzt sind.

5. Ofen nach Anspruch 4, bei dem in der durch die Länge L des Kastens oder der Kästen vorgegebenen Richtung die Öffnungen (31a) entlang der ersten Seite (33) und die Öffnungen (31b) entlang der gegenüberliegenden Seite (34) einen Überlappungsbereich aufweisen, der zwischen 5% und 30% der Länge L beträgt.

6. Ofen nach Anspruch 4, bei dem in der durch die Länge L des Kastens oder der Kästen vorgegebenen Richtung die Öffnungen (31a) entlang der ersten Seite (33) und die Öffnungen (31b) entlang der gegenüberliegenden Seite keinen Überlappungsbereich aufweisen.

7. Ofen nach einem der vorhergehenden Ansprüche, bei dem in der durch die Länge L des Kastens oder der Kästen vorgegebenen Richtung die für die Lufteinlässe auf den beiden Seiten (33, 34) vorgesehenen Öffnungen (31a, 31b) versetzt zueinander angeordnet sind:
- entlang einer ersten Seite (33): von einem ersten Ende (35) der Länge des Kastens zum gegenüberliegenden Ende (36) des Kastens über einen Bereich von weniger als 80% der Länge,
- entlang der gegenüberliegenden Seite (34): vom gegenüberliegenden Ende (36) der Länge des Kastens zum anderen Ende (35) über einen Bereich von weniger als 80% der Länge.

8. Ofen nach dem vorhergehenden Anspruch, bei dem sich in der durch die Länge L des Kastens oder der Kästen vorgegebenen Richtung die entlang einer ersten Seite (33) vorgesehenen Öffnungen (31a) von einem ersten Ende (35) bis zur Mitte des Kastens erstrecken und sich die entlang der gegenüberliegenden Seite (34) vorgesehenen Öffnungen (31b) von dem anderen Ende (36) bis zur Mitte des Kastens erstrecken.

9. Ofen nach einem der vorhergehenden Ansprüche, bei dem in der durch die Länge L des Kastens oder der Kästen vorgegebenen Richtung die Öffnungen (32a) zum Ableiten von Luft nach Durchströmen der Fasermatte über den Lufteinlassöffnungen (31 a) angeordnet sind.

10. Ofen nach einem der vorhergehenden Ansprüche, bei dem in der durch die Länge L des Kastens oder der Kästen vorgegebenen Richtung die Öffnungen (32a) zum Ableiten von Luft nach Durchströmen der Fasermatte in Bezug auf die Lufteinlassöffnungen (31a) versetzt sind.

11. Kasten nach einem der vorhergehenden Ansprüche.

12. Verfahren zur Herstellung einer Matte aus Mineralwollfasern, insbesondere Glaswollfasern, umfassend mindestens einen Schritt des Zerfaserns der Fasern, auf die eine Lösung eines wärmehärtbaren Bindemittels aufgestäubt wird, und einen Schritt des Erhitzens des Bindemittels auf eine Temperatur, die ein Härten des Bindemittels erlaubt, wobei der Schritt des Erhitzens mittels eines Ofens nach einem der Ansprüche 1 bis 10 durchgeführt wird.

13. Verfahren nach dem vorhergehenden Anspruch, bei dem das Bindemittel auf pflanzlicher Basis gewonnen wird, insbesondere auf Basis hydrierter oder unhydrierter Zucker.

14. Verfahren nach einem der Ansprüche 12 oder 13, bei dem heiße Luft mit einer Temperatur zwischen 200°C und 250°C in den Ofen eingeblasen wird.

## Claims

1. An oven (12) for baking a thermally curing binder present in a mat (11) of mineral fibers, comprising a series of compartments (21-27) through which said mat of fibers passes successively, said mat being compressed and transported through said compartments by gas-permeable upper conveyors (13) and lower conveyors (14), each compartment having a length L along the direction of movement (50) of the mat and furthermore comprising means (28) for introducing a hot air flow, which means are located either below or above said fiber mat, and means (29) for extracting the air after it has passed through the mat, which means are respectively arranged either above or below the opposite face of said mat, so that the binder is progressively brought to a temperature higher than its curing temperature, said oven being **characterized in that** it has at least one compartment (30) in which it said means (28) for introducing hot air, comprising air inlets which open partly on openings (31a, 31b) formed on a first lateral side (33) of said compartment and partly on openings formed on the opposite lateral side (34) of said compartment.

2. The oven as claimed in claim 1, wherein, within said compartment or compartments, said means for extracting the air after it has passed through the mat comprise air outlets which open partly on openings (32a, 32b) formed on the first lateral side (33) and partly on openings formed on the opposite lateral side (34) of said compartment.

3. The oven as claimed in one of claims 1 and 2, wherein, along the direction given by the length L of said compartment or compartments, the openings (31a) formed for the air inlets on the first side (33) are arranged substantially facing the openings (31b) formed for the air inlets on the opposite side.

4. The oven as claimed in one of claims 1 and 2, wherein, along the direction given by the length L of said compartment or compartments, the openings (31a) formed for the air inlets on the first side (33) and the openings (31b) formed for the air inlets on the opposite side (34) are offset.

5. The oven as claimed in claim 4, wherein, along the direction given by the length L of said compartment or compartments, the openings (31a) on the first side (33) and the openings (31b) on the opposite side (34) have an overlap region of between 5 and 30% of the length L.

6. The oven as claimed in claim 4, wherein, along the direction given by the length L of said compartment or compartments, the openings (31a) on the first side (33) and the openings (31b) on the opposite side do not have an overlap region.

7. The oven as claimed in one of the preceding claims, wherein, along the direction given by the length L of said compartment or compartments, the openings (31a, 31b) formed for the air inlets on the two sides (33, 34) are offset and are arranged:
- on a first side (33): from a first end (35) of the length of the compartment toward the opposite end (36) of the compartment, over a portion of less than 80% of said length,
- on the opposite side (34) : from the opposite end (36) of the length of the compartment toward the other end (35), over a portion of less than 80% of said length.

8. The oven as claimed in the preceding claim, wherein, along the direction given by the length L of said compartment or compartments, the openings (31a) formed on a first side (33) extend from a first end (35) to the center of said compartment, and wherein the openings (31b) formed on the opposite side (34) extend from the other end (36) to the center of said compartment.

9. The oven as claimed in one of the preceding claims, wherein, along the direction given by the length L of said compartment or compartments, the openings (32a) formed for the extraction of air after it has passed through the mat of fibers are arranged above the air outlet openings (31a).

10. The oven as claimed in one of the preceding claims, wherein, along the direction given by the length L of said compartment or compartments, the openings (32a) formed for the extraction of air after it has passed through the mat of fibers are offset with respect to the air inlet openings (31a).

11. A compartment as described in one of the preceding claims.

12. A method for manufacturing a mat of mineral wool fibers, in particular glass wool fibers, comprising at least one step of fibering said fibers, onto which a solution of thermally curable binder is sprayed, and a step of heating the binder to a temperature making it possible to cure the binder, wherein said heating step is carried out by means of an oven as claimed in one of claims 1 to 10.

13. The method as claimed in the preceding claim, wherein said binder is obtained from a plant source, in particular based on hydrogenated or non-hydrogenated sugars.

14. The method as claimed in one of claims 12 and 13, wherein hot air whose temperature lies between 200°C and 250°C is injected into the oven.
